## Europäisches Patentamt
## European Patent Office
## Office européen des brevets

(11) Veröffentlichungsnummer: **0 387 636**
**A2**

# (12) EUROPÄISCHE PATENTANMELDUNG

(21) Anmeldenummer: 90104093.1

(22) Anmeldetag: 02.03.90

(51) Int. Cl.5: **B23B 27/04**

(30) Priorität: **11.03.89 DE 3907922**

(43) Veröffentlichungstag der Anmeldung:
**19.09.90 Patentblatt 90/38**

(84) Benannte Vertragsstaaten:
**AT CH DE ES FR GB IT LI NL SE**

(71) Anmelder: **Zinner GmbH**
**Karl-Martell-Strasse 35**
**D-8500 Nürnberg 80(DE)**

(72) Erfinder: **Zinner, Karl**
**Uehlfelder Strasse 21**
**D-8500 Nürnberg 80(DE)**

(74) Vertreter: **Patentanwälte Czowalla . Matschkur**
**& Partner**
**Dr.-Kurt-Schumacher-Strasse 23 Postfach**
**9109**
**D-8500 Nürnberg 11(DE)**

(54) **Spanendes Werkzeug.**

(57) Die Erfindung bezieht sich auf ein spanendes Werkzeug, insbesondere in Werkzeughaltern auswechselbarer Stech- oder Schneideinsatz, mit Schneidkeil, an dem eine Spanfläche anliegt, wobei auf der Spanfläche ein oder mehrere Noppen in Form von Kugelsegmenten, Kegel- und/oder Pyramidenstümpfen ausgebildet sind.

FIG. 2

EP 0 387 636 A2

## Spanendes Werkzeug

Die Erfindung betrifft ein spanendes Werkzeug, insbesondere einen in Werkzeughaltern auswechselbaren Stech- oder Schneideinsatz, die jeweils einen Schneidkeil aufweisen, an dem eine Spanfläche anliegt.

Bekannt ist ein auswechselbarer Schneideinsatz für Metallschneidwerkzeuge (PS DE 30 50 925), bei dem der Schneidenkante und der nachgeschalteten Spanfläche eine Spanflächenfase zwischengeschaltet ist. Von dieser ausgehend erstrecken sich eine oder mehrere Rippen senkrecht von der Schneidenkante weg und vorzugsweise in der Mitte zwischen den einander gegenüberliegenden Seiten der Spanfläche. Diese Rippe dient der Verformung der von der Schneidenkante abgescherten Späne, die hierdurch insbesondere aufgerollt und seitlich eingeengt werden sollen. Die damit erzielbare Verkürzung des Spans gegenüber der Abscherbreite ist allerdings in vielen Anwendungen unbefriedigend.

Hieraus folgt die der Erfindung zugrundeliegende Aufgabe, unter Vermeidung des o.g. Nachteils ein spanendes Werkzeug zu schaffen, dessen Spanverformer auf der Spanfläche eine verbesserte Spanflußkontrolle insbesondere dergestalt ermöglichen, daß unmittelbar nach dem Abschervorgang die Spanlängen wesentlich gekürzt werden. Zur Lösung wird erfindungsgemäß vorgeschlagen, ein oder mehrere sich auf der Spanfläche erhebende Noppen vorzusehen, welche die Form von Kugelsegmenten, Kegel- und/oder Pyramidenstümpfen aufweisen.

Nach erfolgtem Schervorgang kann der dabei gebildete, länglich zusammenhängende Span entsprechend der (hohen) Schnittgeschwindigkeit gegen die Noppe prallen. Die eine oder auch mehreren Noppen trennen den Span seiner Länge nach in ein oder mehrere Teile auf, so daß zwei, drei, vier usw. Spanteile entstehen. Es liegt auf der Hand, daß diese im Vergleich zur Länge des ursprünglich abgescherten Spanes wesentlich kürzer sind. Die so separierten, losen Einzelspanteile verhängen sich nicht so leicht im Werkstück, Werkzeug od. in der Werkzeugmaschine, und infolgedessen wird insgesamt die Zuverlässigkeit und Sicherheit des Werkstückbeabeitungsvorganges erhöht.

In Weiterbildung der Erfindung ist die Spanfläche mit einen Zentralbereich und einen oder mehreren, diesen allseits umgebenden und ihm gegenüber schräg ansteigenden Randabschnitten versehen, die in mit den Freiflächen des Schneidkeils gemeinsamen Kanten enden. M.a.W., die Spanfläche weist einen gegenüber ihren Randbereichen bzw. -abschnitten abgesenkten Zentralbereich auf.

Damit wird der Vorteil erzielt, daß der Span vor Aufprall auf einen Noppen bereits entsprechend der Absenkung entlang seiner Länge verbogen und mithin gegenüber der Abscherbreite verkürzt ist. Bevor es dann aufgrund der im Span vorherrschenden Spannungen zu dessen Verwicklung zu einer engen Spirale kommt, prallt er auf einen oder mehrere der genannten Noppen auf und wird in Einzelstücke zertrennt.

In diesem Zusammenhang besteht eine spezielle Ausbildung der Erfindung darin, daß der Zentralbereich und die mit den Freiflächen gemeinsamen Kanten der Spanfläche durch eine oder mehrere nutenartige Vertiefungen verbunden sind, die sich zwischen den Randabschnitten erstrecken. Hierdurch wird der Spanfluß von den Außenkanten zum Zentralbereich der Spanfläche und ggf. zu den im Zentralbereich angeordneten Noppen präzise geleitet und intensiviert. Mit besonderem Vorteil sind diese Vertiefungen als geradlinig verlaufende Nuten ausgebildet und, sofern die Spanfläche und der in ihrem Inneren angeordnete Zentralbereich jeweils mehreckig sind, dienen als Verbindungskanäle zwischen den (mit den Freiflächen gemeinsamen) Eckkanten der Spanfläche und den Eckabschnitten ihres Zentralbereichs. Da nach diesem Weiterbildungsgedanken der Spanfluß zur Mitte der Spanfläche hin konzentriert ist, ist es zweckmäßig, dort, d.h. im Zentralbereich der Spanfläche, ein oder mehrere Noppen anzuordnen. Andererseits liegt es im Rahmen der Erfindung, daß wenigstens eine Noppe unmittelbar an seiner Schneidenkante angrenzend angeordnet ist. Bei dieser Alternative trifft der soeben abgetrennte Span gerade dann, wenn er sich noch in seinem höchst-verformbaren Zustand befindet, auf den Noppen zur Zerkleinerung auf.

Der Förderung eines gleichmäßig-kontinuierlichen Spanflusses sowie der effizienten Ausnutzung der zur Verfügung stehenden Spanfläche dient es, nach einer weiterer Ausbildung der Erfindung die Noppen über die Spanfläche symmetrisch zu verteilen. In diesem Sinne ist es besonders zweckmäßig, einzelne Noppen entsprechend den Ecken eines gleichschenkligen Dreiecks oder eines Parallelogramms und/oder in einer Flucht parallel oder entsprechend der mittleren Längsachse des Werkzeugs anzuordnen.

In Zusammenhang mit der Unterteilung der Spanfläche in Zentralbereich und Randabschnitte besteht eine vorteilhafte Weiterbildung darin, daß eine oder mehrere Noppen sich jeweils beidseits der Grenzlinie zwischen Zentralbereich und Randabschnitt erstrecken. Einerseits wird dann der soeben abgescherte Span in einem noch hoch verformbaren Zustand zum Noppen geleitet, und andererseits können die bereits zerkleinerten Späne sich im Zentralbereich sammeln und dann auf weitere, nachgeordnete Noppen zur weiteren Zer kleinerung auftreffen. Der bereits zuvor erläuterten Vorab-Verkürzung des Spans vor Zertrennung durch einen Noppen dient es, wenn eine einer Noppe vorgeschaltete Mulde zur Spanverformung vorzugsweise in Kugelsegmentform vorgesehen ist. Hierdurch wird der Span in seinem Längsverlauf entsprechend verbogen und möglicherweise aufgrund der scharfen Kanten, die von der Kugelmulde mit der umgebenden Spanfläche gebildet sind, bereits in zwei oder drei Teile zertrennt. In diesem Sinn ist es zweckmäßig, die Mulde unmittelbar an der Schneidenkante des Werkzeugs angrenzend anzuordnen und mithin auf den Span in seinem höchst verformbaren Zustand einwirken zu lassen.

Eine spezielle Ausbildung der Erfindung, bei der die Unterteilung der Spanfläche in Zentralbereich und Randabschnitte sowie das Vorsehen der Mulde unmittelbar an der Schneidenkante in ihren Wirkungen vorteilhaft kombiniert sind, besteht darin, daß sich die Mulde von der Schneidenkante über den Randabschnitt an die gegenüberliegende Grenzlinie zum Zentralbereich, und die der Mulde nachgeschaltete Noppe sich im Zentralbereich von dieser Grenzlinie an die gegenüberliegende Grenzlinie zum daran angrenzenden Randabschnitt erstrecken. Neben der Konzentrierung des Spanflusses auf die zentral bzw. mittig angeordnete Noppe wird erreicht, daß der Span gerade mit seinem durch die Mulde mittig gebogenen Abschnitt auf die Noppe auftrifft; in dem mittig gebogenen Abschnitt sind die mechanischen Spannungen am größten, so daß bei Aufprall des Spanes entsprechend der Schnittgeschwindigkeit dessen Zerteilung in Einzelstücke durch die Noppe umso leichter erfolgen kann.

Eine im Rahmen der erfinderischen Idee liegende Lösungsalternative der eingangs genannten Aufgabe besteht darin, bei einem spanenden Werkzeug mit am Schneidkeil anliegender Spanfläche darauf wenigstens eine konkave oder konvexe Kalotte auszubilden. Mit dem Vorsehen einer positiven oder negativen Kalotte wird auf der Spanfläche eine nach außen oder nach innen gewölbte bzw. gekrümmte Fläche geschaffen, an die sich der abgetrennte Span in seinem Längsverlauf anpaßt und mithin verkürzt. Damit das Auftreffen des Spans auf die Kalotte begünstigt wird, ist in zweckmäßiger Weiterbildung der Erfindung der Kalotte ein gerader oder schräger Spaneinlauf vorgeschaltet, der unmittelbar an der Schneidenkante des Werkzeugs angrenzt. Der Abtransport des soeben abgetrennten Spanes von der Schneidenkante wird durch eine Weiterbildung gefördert, nach der die in Vorschubrichtung seitlich angeordneten Ränder der Kalotte senkrecht zur Werkzeug-Schneidenkante verlaufen. Dabei kann die Kalotte am der Vorschubrichtung entgegengesetzt abgewandten Ende, also dem Klemmschaft des Werkzeugeinsatzes gegenüberliegend, kugelförmig eingeschliffen sein.

Mit Vorteil sind um die Kalotte herum eine oder mehrere rippenartige Erhöhungen ausgebildet, die mit zunehmender Nähe zu den an den Freiflächen angrenzenden Rändern der Spanfläche hin, vorzugsweise allmählich abflachend, in nutenartige Vertiefungen übergehen. Eine beispielhafte Ausführung dieses Gedankens besteht darin, daß die Erhöhungen zusammen eine H-Form mit gebogenen bzw. geschwungenen Linien bildend angeordnet sind und in den Eckbereichen der Spanfläche als Nuten enden. Der dabei entstehende Quersteg der H-Form teilt die Spanfläche in einen vorderen und hinteren Bereich auf, und die Kalotte ist dabei zweckmäßigerweise im vorderen Bereich, also in Vorschubrichtung vor dem Quersteg ausgebildet.

Weitere Merkmale, Einzelheiten und Vorteile ergeben sich aus der nachfolgenden Beschreibung bevorzugter Ausführungs beispiele der Erfindung sowie anhand der Zeichnung. Darin zeigen:

Fig. 1 in Seitenansicht das Halterungsprinzip für einen auswechselbaren Werkzeug-Einsatz,

Fig. 2 eine teilweise geschnittene, vergrößerte Seitenansicht auf einen erfindungsgemäßen Werkzeug-Einsatz,

Fig. 3 eine teilweise geschnittene Stirnansicht etwa gemäß der Linie III - III in Fig. 2,

Fig. 4 eine Draufsicht etwa gemäß der Richtung IV in Fig. 2 und

Fig. 5 - 17 etwa der Richtung IV in Fig. 2 entsprechende Draufsichten auf Werkzeug-Einsätze mit jeweils erfindungsgemäß abgewandelten Spanleitgeometrien.

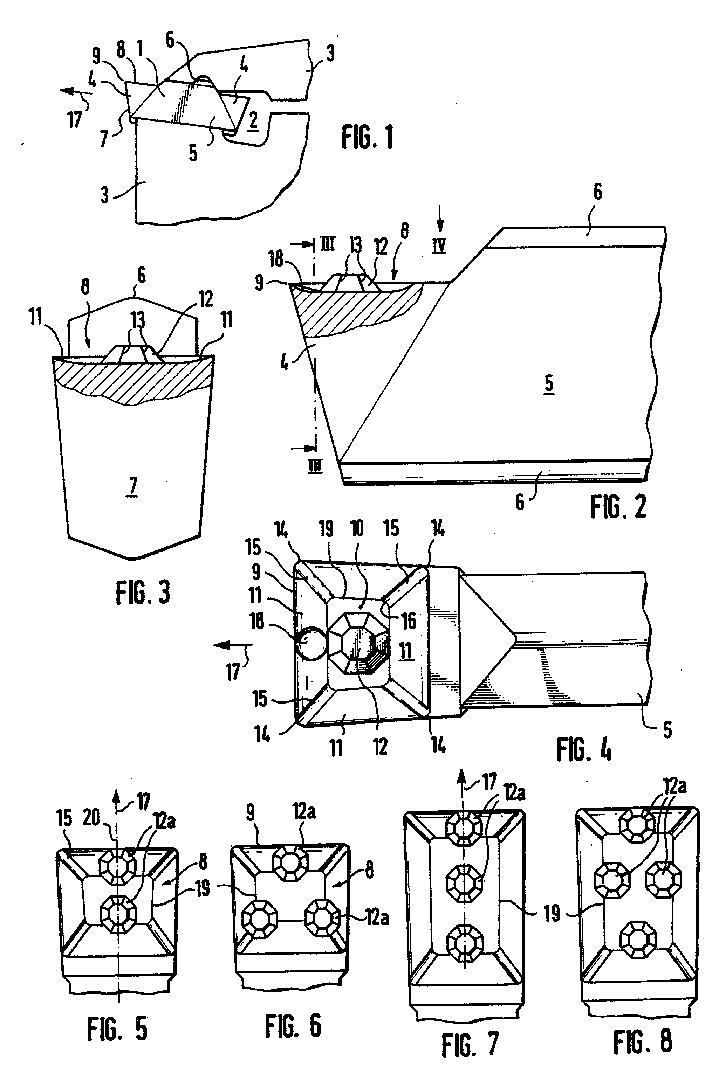

In Fig. 1 ist die Klemmung eines Werkzeug-Einsatzes 1 im Klemmschlitz 2 zwischen den abgebrochen gezeichneten Backen 3 eines Werkzeughalters veranschaulicht. Der Werkzeugeinsatz 1 ist gemäß gezeichnetem Beispiel als Abstechwerkzeug mit zwei an entgegengesetzten Enden angeordneten Schneidkeilen 4 ausgeführt. Zwischen diesen ist der Klemmschaft 5 mit Prismenführung 6 ausgebildet. Die Schneidkeile 4 sind von Freiflächen 7 und Spanflächen 8 begrenzt, welche zusammen die Schneidenkante 9 des spanenden Werkzeug-Einsatzes 1 bilden.

Gemäß dem in Fig. 2 - 4 veranschaulichten Ausführungsbeispiel ist die Spanfläche 8 in einen etwa mittig angeordneten, viereckigen Zentralbereich 10 und diesen vollständig umgebende Randabschnitte 11 aufgeteilt, die gegenüber dem Zentralbereich 10 zu den Rändern der Spanfläche 8 hin ansteigen. Auf dem Zentralbereich 10 der Spanfläche 8 erhebt sich ein Noppen 12 in der Form eines Pyramidenstumpfes mit den der Pyramidengrundfläche entsprechenden Eckkanten 13. Im gezeichneten Beispiel handelt es sich um eine achteckige Pyramidengrundfläche, grundsätzlich kann jedoch eine Pyramidengrundfläche mit mehr oder weniger Ecken Verwendung finden. Die dabei entstehenden Pyramideneckkanten 13 sind für die angestrebte Zerkleinerung der Späne besonders vorteilhaft; ihre spandurchtrennende Wirkung wird mit zunehmender Scharfkantigkeit vergrößert.

Sowohl die Spanfläche 8 als auch der in ihrem Inneren abgegrenzte Zentralbereich 10 weisen eine im wesentlichen viereckige Grundfläche auf, wobei deren benachbarte Seiten jeweils zueinander parallel verlaufen. Von den am Rand der Spanfläche 8 befindlichen Eckkanten 14 führen jeweils nutenartige Vertiefungen 15 zu den nächst liegenden Eckabschnitten 16 des Zentralbereichs 10. Durch diese Ausbildung der Spanleitgeometrie wird eine Zentrierung des Spanflusses auf den mittig angeordneten Noppen 12 erreicht. In Stirnansicht entgegen der Vorschubrichtung 17 gesehen ist vor dem Noppen 12 eine Spanverformungs-Mulde 18 vorgesehen, die die Oberfläche des an die Schneidenkante 9 angrenzenden Randabschnitts 11 kugelsegmentartig vertieft. Die Mulde 18 bzw. der Noppen 12 durchmessen in Vorschubrichtung 17 den jeweils zugehörigen Randabschnitt 11 bzw. Zentralbereich 10 vollständig, so daß die Zentralbereich 10 und Randabschnitte 11 unterscheidende Grenzkante 19 auch die Ränder der Mulde 18 und des Noppens 12 tangiert.

Wie in Fig. 5 - 8 angedeutet, sind auf der Basis des Erfindungsgedankens andere, vielfältige Möglichkeiten zur Anordnung der Noppen zwecks Leiten des Spanflusses gegeben. Gemäß Fig. 5 bzw. 7 sind zwei bzw. drei Noppen 12 in einer der Vorschubrichtung 17 entsprechenden Flucht hintereinan der plaziert. Dabei durchsetzen bzw. unterbrechen jeweils die vorderste bzw. hinterste Noppe 12a die Grenzkante 19, d.h. sie erstrecken sich sowohl in einen der Randabschnitte 11, die jeweils durch eine nutenartige Vertiefung 15 voneinander abgegrenzt sind, und in den Zentralbereich 10. Gemäß Fig. 6 bzw. 8 sind drei bzw. vier Noppen 12 dergestalt angeordnet, daß das durch ihre Verbindungslinien gebildete Dreieck bzw. Viereck gleichschenklig bzw. parallelogrammartig geformt ist.

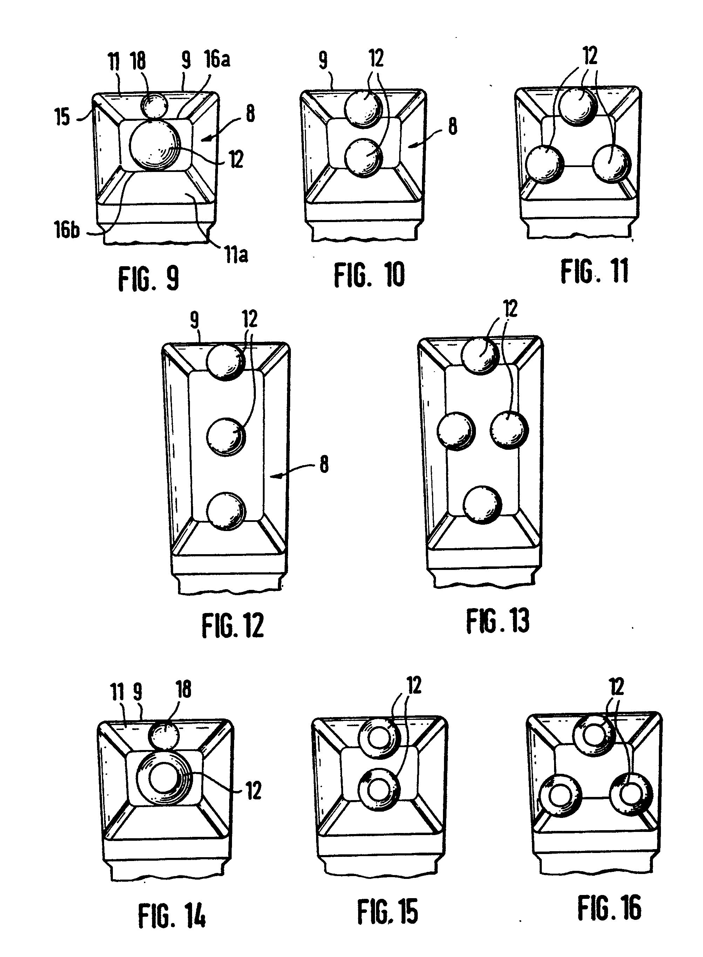

Die in Fig. 9 - 13 gezeigten Ausführungsbeispiele stimmen mit den zuvor erläuterten Ausführungsbeispielen überein, allerdings mit der Ausnahme, daß die Noppen 12 Kugelsegmentform anstelle der Pyramidenstumpfform aufweisen. Entsprechendes gilt für die Ausführungsbeispiele gemäß Fig. 14 - 16, bei der die Noppen 12 die Form eines Kegelstumpfes anstelle der zuvor genannten Pyramidenstumpf- bzw. Kugelsegmentform aufweisen.

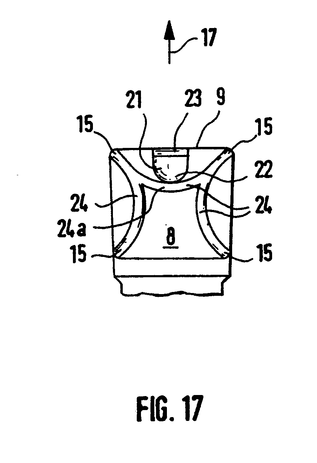

Die Spanleitgeometrie gemäß Figur 17 weicht von den vorhergehenden Beispielen insbesondere dadurch ab, daß im Bereich der Schneidenkante 9 eine Kalotte 21 in die Spanfläche 8 eingeformt ist, die konkav, als Vertiefung, oder konvex, als Erhöhung, ausgebildet sein kann. Ihre Seitenränder erstrecken sich bezüglich der Schneidenkante 9 weitgehend senkrecht, und das der Vorschubrichtung 17 entgegengesetzte Ende 22 ist mit einem kugelförmigen Einschliff versehen. Zwischen der Schneidenkante 9 und der Kalotte 21 ist ein Einlauf 23 angeordnet, der den Spanfluß zur Kalotte 21 fördert. Die Fläche des Einlaufs kann gegenüber der Spanfläche 8 abgeschrägt und nach innen vertieft oder nach außen erhöht sein, im letzteren Fall insbesondere eine Spanflächenfase bildend. Des weiteren sind gemäß Ausführungsbeispiel der Figur 17 im Längsverlauf gebogene Rippen 24 vorgesehen, deren Gesamtanordnung einer H-Form angenähert ist. Die freien Enden der Rippen laufen jeweils - allmählich abflachend - in gegenüber der Spanfläche 8 vertiefte Nuten 15 aus, die in den Eckbereichen der Spanfläche 8 sich befinden. Die den Quersteg der H-Form bildende (mittlere) Rippe 24a gliedert die Spanfläche 8 in einen bezüglich der Vorschubrichtung 17 vorderen und hinteren Bereich, wobei die Kalotte 21 im vorderen Bereich angeordnet ist.

**Ansprüche**

1. Spanendes Werkzeug, insbesondere in Werkzeughaltern auswechselbarer Stech- oder Schneideinsatz, mit Schneidkeil, an dem eine Spanfläche anliegt, dadurch gekennzeichnet, daß auf der Spanfläche (8) ein oder mehrere Noppen (12) in Form von Kugelsegmenten (Fig. 9-13), Kegel- und/oder Pyramidenstümpfen (Fig. 14-16 bzw. 2-8) ausgebildet sind.

2. Werkzeug nach Anspruch 1, dadurch gekennzeichnet, daß die Spanfläche (8) einen Zentralbereich (10) und ein oder mehrere diesen allseits umgebende und ihm gegenüber schräg ansteigende Randabschnitte (11) aufweist, die in mit den Freiflächen (7) des Schneidkeils (4) gemeinsamen Kanten enden.

3. Werkzeug nach Anspruch 2, dadurch gekennzeichnet, daß der Zentralbereich (10) und die mit den Freiflächen (7) gemeinsamen Kanten der Spanfläche (8) miteinander verbunden sind durch eine oder mehrere nutenartige Vertiefungen (15) zwischen den Randabschnitten (11).

4. Werkzeug nach Anspruch 3, dadurch gekennzeichnet, daß die Vertiefungen (15) geradlinig verlaufen und ggf. mit den Freiflächen (7) gemeinsame Eckkanten (14) der Spanfläche (8) und Eckabschnitte (16) ihres Zentralbereichs (10) miteinan-

5. Werkzeug nach einem der vorhergehenden Ansprüche, dadurch gekennzeichnet, daß wenigstens eine Noppe (12) unmittelbar an seiner Schneidkante (9) angrenzend und/oder ggf. im Zentralbereich (10) liegend angeordnet ist.

6. Werkzeug nach einem der vorhergehenden Ansprüche, dadurch gekennzeichnet, daß die Noppen (12) über die Spanfläche (8) symmetrisch verteilt, vorzugsweise entsprechend den Ecken eines gleichschenkligen Dreiecks (Fig. 6, 11, 16) oder Parallelogramms (Fig. 8, 13) und/oder in einer Flucht (17) parallel oder entsprechend der mittleren Längsachse (20) des Werkzeugs (1) angeordnet sind.

7. Werkzeug nach Anspruch 2 und einem der vorhergehenden Ansprüche, dadurch gekennzeichnet, daß eine oder mehrere Noppen (12) sich jeweils beidseits der Grenzlinie (19) zwischen Zentralbereich (10) und Randabschnitt (11) erstrecken.

8. Werkzeug nach einem der vorhergehenden Ansprüche, gekennzeichnet durch eine einer Noppe (12) vorgeschaltete Mulde (18) zur Spanverformung vorzugsweise in Kugelsegmentform.

9. Werkzeug nach Anspruch 8, dadurch gekennzeichnet, daß unmittelbar an seiner Schneidenkante (9) angrenzend die Mulde (18) angeordnet ist.

10. Werkzeug nach Anspruch 2 und 9, dadurch gekennzeichnet, daß sich die Mulde (18) von der Schneidenkante (9) über den Randabschnitt (11) an die gegenüberliegende Grenzlinie (16a) zum Zentralbereich, und die nachgeschaltete Noppe sich im Zentralbereich von dieser Grenzlinie (16a) an die gegenüberliegende Grenzlinie (16b) zum daran angrenzenden Randabschnitt (11a) erstrecken.

11. Spanendes Werkzeug, insbesondere in Werkzeughaltern auswechselbarer Stech- oder Schneideinsatz, mit Schneidkeil, an dem eine Spanfläche anliegt, dadurch gekennzeichnet, daß auf der Spanfläche (8) wenigstens eine konkave oder konvexe Kalotte (21) ausgebildet ist.

12. Werkzeug nach Anspruch 11, dadurch gekennzeichnet, daß seiner Schneidkante (9) und der nächstliegenden Kalotte (21) ein gerader oder schräger Spaneinlauf (23) zwischengeschaltet ist.

13. Werkzeug nach Anspruch 11 oder 12, dadurch gekennzeichnet, daß die in Vorschubrichtung (17) seitlich angeordneten Ränder der Kalotte (21) senkrecht zur Werkzeug-Schneidenkante (9) verlaufen.

14. Werkzeug nach Anspruch 13, dadurch gekennzeichnet, daß die Kalotte (21) am der Vorschubrichtung (17) entgegengesetzt abgewandten Ende (22) kugelförmig eingeschliffen ist.

15. Werkzeug nach einem der Ansprüche 11-14, gekennzeichnet durch eine oder mehrere um die Kalotte (21) herumführende, rippenartige Erhöhungen (24), die mit zunehmender Nähe zu den Rändern der Spanfläche hin in nutenartige Vertiefungen (15) übergehen.

16. Werkzeug nach Anspruch 15, dadurch gekennzeichnet, daß die Erhöhungen (24) zusammen eine H-Form mit gebogenen Linien bildend angeordnet sind und in den Eckbereichen der Spanfläche als Nuten (15) enden.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17